# EUROPEAN PATENT APPLICATION

(11) **EP 2 570 663 A2**
(43) Date of publication of application: **20.03.2013**
(21) Application number: 12183115.0
(22) Date of filing: 05.09.2012
(51) Int. Cl.: F03D 11/02, F16C 33/66

(54) **Drivetrain and method for lubricating bearing in wind turbine**

(30) Priority: 14.09.2011 US 201113232561
(71) Applicant: General Electric Company, Schenectady, NY 12345 (US)
(72) Inventor: Minadeo, Adam Daniel, Greenville, SC South Carolina 29615 (US); Patel, Priyangu Chunilal, Greenville, SC South Carolina 29615 (US); Burkett, Michael Jay, Greenville, SC South Carolina 29615 (US)
(74) Representative: Bedford, Grant Richard

(57) **Abstract**

A drivetrain (28) for a wind turbine (10) and a method for lubricating a bearing (90, 92) in a drivetrain (28) of a wind turbine (10) are disclosed. The drivetrain (28) includes a rotatable component and a bearing (90, 92) surrounding the rotatable component. The drivetrain (28) further includes a lubrication passage (100) in fluid communication with the bearing (90, 92) for providing lubrication fluid (102) thereto, and a drainage passage (104) in fluid communication with the bearing (90, 92) for removing lubrication fluid (102) therefrom. Further, the drivetrain (28) includes a dry sump (120) in fluid communication with the drainage passage (104). The dry sump (120) includes a pump (122) operable to flow lubrication fluid (102) from the drainage passage (104).

## Description

The present disclosure relates in general to wind turbines, and more particularly to drivetrains and methods for lubricating bearings in drivetrains in wind turbines.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

During operation of the wind turbine, various components of the drivetrain of the wind turbine, which may include the gearbox, must be lubricated in order to operate efficiently. For example, various bearings must be lubricated. Thus, oil or another suitable lubrication fluid is typically provided internally to the drivetrain to lubricate these various components.

Internal passages are typically defined in the drivetrain of a wind turbine to flow such lubrication fluid therethrough. After the lubrication fluid covers various components, such as bearings, in a wind turbine drivetrain, the lubrication fluid typically drains due to gravity to a low point within the drivetrain. This typical design, however, has a variety of disadvantages. For example, drained lubrication fluid may pool in undesirable areas of the drivetrain, thus clogging these areas, causing churning and preventing efficient operation. Additionally, lubrication fluid may leak past the various seals in the drivetrain, which can damage various other components of the wind turbine, such as components of the generator, and/or cause such components to fail.

Accordingly, an improved drivetrain and method for lubricating a bearing in a wind turbine are desired in the art. For example, a drivetrain and method that prevent pooling and leakage of lubrication fluid would be advantageous.

Various aspects and advantages of the invention will be set forth in part in the following description, or may be clear from the description, or may be learned through practice of the invention.

In one embodiment, a drivetrain for a wind turbine is disclosed. The drivetrain includes a rotatable component and a bearing surrounding the rotatable component. The drivetrain further includes a lubrication passage in fluid communication with the bearing for providing lubrication fluid thereto, and a drainage passage in fluid communication with the bearing for removing lubrication fluid therefrom. Further, the drivetrain includes a dry sump in fluid communication with the drainage passage. The dry sump includes a pump operable to flow lubrication fluid from the drainage passage.

In another embodiment, a method for lubricating a bearing in a drivetrain of a wind turbine is disclosed. The method includes flowing lubrication fluid to the bearing and suctioning the lubrication fluid from the bearing. The bearing surrounds a rotatable component.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 is a perspective view of a wind turbine according to one embodiment of the present disclosure;
FIG. 2 is a sectional view of a drivetrain for a wind turbine according to one embodiment of the present disclosure; and
FIG. 3 is a close-up sectional view of various components of a drivetrain for a wind turbine according to one embodiment of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

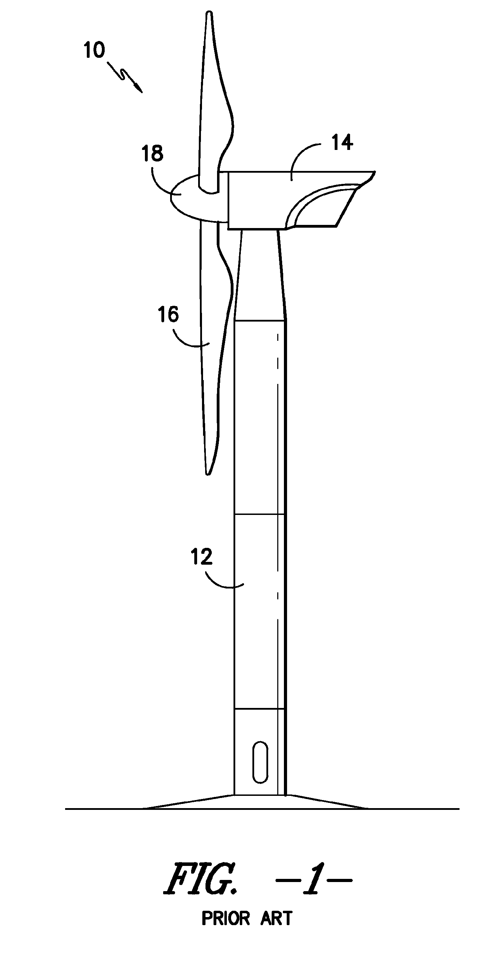

FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft, as discussed below. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

The rotor hub 18 may be configured to accept the rotor blades 16 thereon. For example, the rotor hub 18 may include a plurality of blade flanges (not shown). The blade flanges may be configured to engage mating flanges (not shown) on the rotor blades 16 to mount the rotor blades 16 to the flanges, and thus to the rotor hub 18.

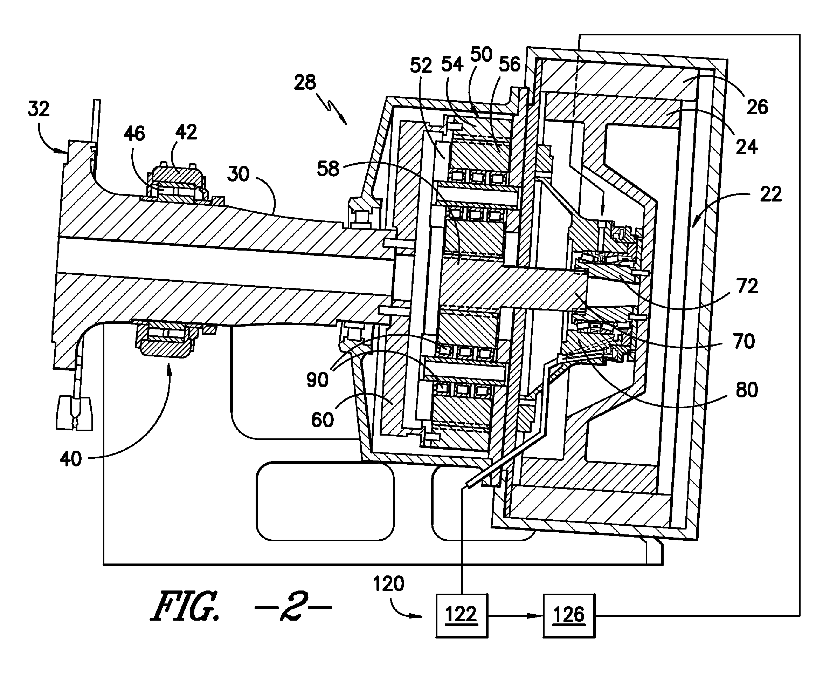

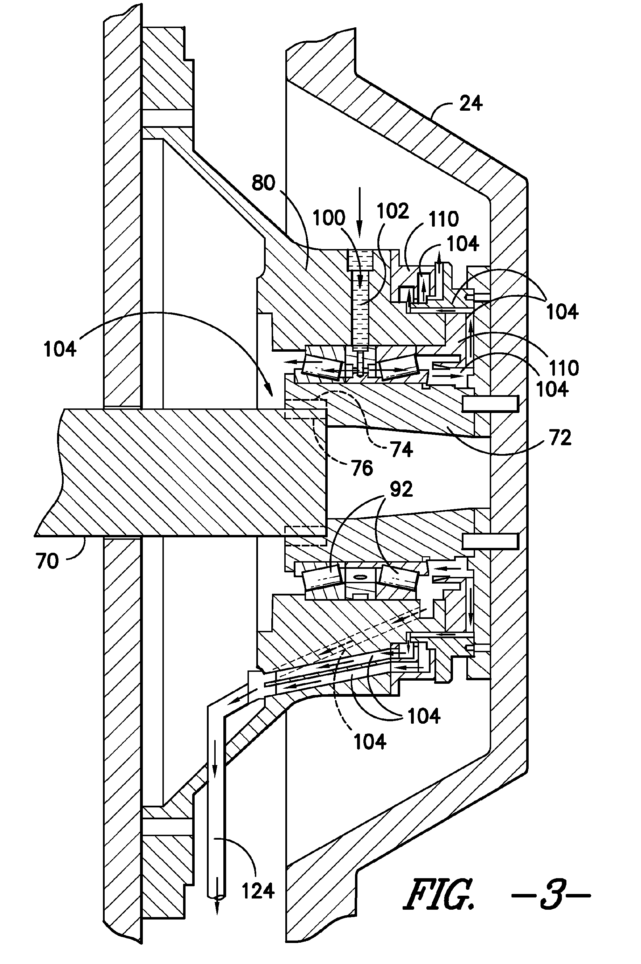

As shown in FIGS. 2 and 3, the wind turbine 10 may further include a generator 22. In exemplary embodiments, the generator 22 may be housed in the nacelle 14. The generator 22 may be configured to accept mechanical energy from the rotor blades 16 and rotor hub 18 and convert this energy to electrical energy. For example, the generator 22 may include a rotor 24 and a stator 26. As is known in the art, the rotor 24 is a generally movable component of the generator 22, while the stator 26 is a generally stationary component of the generator 22. The generator 22 in exemplary embodiments may be a permanent magnet generator. However, it should be understood that the generator 22 according to the present disclosure is not limited to permanent magnet generators, and rather that any generator suitable for powering a wind turbine 10 is within the scope and spirit of the present disclosure.

In general, the rotor blades 16 may rotate the rotor 24 of the generator 22. The generator 22, such as the rotor 24, may be operably connected to the rotor hub 18. Operation of the rotor blades 16 rotates the rotor hub 18, which rotates the rotor 24 and thus operates the generator 22. Further, a drivetrain 28 for the generator 22 may be provided between the hub 18 and the rotor 24 to provide the operable connection between the hub 18 and the rotor 24.

As shown in FIGS. 2 and 3, the drivetrain 28 according to the present disclosure may include an input shaft 30 configured to provide an input rotational speed. For example, the rotor hub 18 may be mounted to the input shaft 30. As shown, the input shaft 30 may include a flange 32 configured to engage a mating flange (not shown) on the rotor hub 18 to mount the rotor hub 18 to the input shaft 30. Thus, during operation of the wind turbine 10, the rotational speed of the rotor blades 16 may be directly transmitted through the rotor hub 18 to the input shaft 30 as an input rotational speed.

The input shaft 30 may extend through and be supported by at least one support housing 40 or a plurality of support housings 40. For example, a forward housing 42 and, in some embodiments, an aft housing (not shown), may be provided to support the input shaft 30. The housings 40 may include bearings configured to interact with the input shaft. For example, the forward housing 42 may include a locating bearing 46 therein, while the aft housing may include a floating bearing (not shown) therein. It should be understood that the present disclosure is not limited to locating bearings and floating bearings positioned in housings as described above, and rather that any suitable bearings and housings are within the scope and spirit of the present disclosure.

The drivetrain 28 according to the present disclosure may further include a gearbox. In exemplary embodiments, for example, the gearbox may be a planetary gearbox 50. The gearbox may be configured to convert the input rotational speed to an output rotational speed. In exemplary embodiments, the output rotational speed may be faster than the input rotational speed. Alternatively, however, the output rotational speed may be slower than the input rotational speed. The gearbox 50 may be in communication with the input shaft 30 such that the input rotational speed of the input shaft 30 is provided to the gearbox 50.

In exemplary embodiments, the gearbox is a single stage gearbox. Thus, the input rotational speed may be converted to the output rotational speed through a single stage of various mating gears, as discussed below. Alternatively, however, the gearbox may be a multiple stage gearbox, and the input rotational speed may be converted to the output rotational speed through multiple stages of various mating gears.

One embodiment of a planetary gearbox 50 according to the present disclosure includes a stationary carrier 52 and a plurality of rotatable gears. The stationary carrier 52 supports the planetary gearbox 50 and the various rotatable gears therein, and includes various axes for various of the rotatable gears to rotate about. In exemplary embodiments, the planetary gearbox 50 comprises the stationary carrier 52 and a rotatable ring gear 54, at least one or a plurality of rotatable planetary gears 56, and a rotatable sun gear 58. While in some exemplary embodiments the planetary gearbox 50 includes four planetary gears 56, it should be understood that more or less than four planetary gears 56 are within the scope and spirit of the present disclosure.

Each of the rotatable gears in the planetary gearbox 50 includes a plurality of gear teeth (not shown). The teeth may mesh together such that the various gears 54, 56, 58 engage each other.

In exemplary embodiments, the ring gear 54 may drive the planetary gearbox 50. Thus, the ring gear 54 and the input shaft 30 may be in communication such that the input rotational speed of the input shaft 30 is provided to the ring gear 54. For example, disk 60 may connect the ring gear 54 and input shaft 30, or the ring gear 54 and input shaft 30 may be otherwise suitably connected. Alternatively, however, the planetary gears 56 or the sun gear 58 may drive the planetary gearbox 50.

The drivetrain 28 of the present disclosure may further include an output shaft 70. The output shaft 70 may be in communication with the gearbox, such as with the planetary gearbox 50, and configured to rotate at the output rotational speed. In exemplary embodiments, for example, the output shaft 70 may be the sun gear 58. Thus, the sun gear 58 may engage the planetary gears 56 and may further extend from the planetary gearbox 50 towards the generator 22. In other embodiments, the output shaft 70 may be coupled to the sun gear 58 or other output gear of the planetary gearbox 50 or other suitable gearbox such that the output shaft 70 may rotate at the output rotational speed.

The output shaft 70 may be in communication with the generator 22 to rotate the rotor 24. For example, in some embodiments, the output shaft 70 may be directly connected to the rotor 24. In other embodiments, as shown in FIGS. 2 and 3, the drivetrain 28 may comprise a hub 72 configured to drive the rotor 24. The output shaft 70 may be connected to the hub 72, and the hub 72 may be connected to the rotor 24. For example, the output shaft 70 and hub 72 may each include mating splines 74 and 76, respectively. The splines 74 and 76 may be configured to connect the output shaft 70 and hub 72. Thus, the splines 74 and 76 may mate with and engage each other, such that the output rotational speed and the torque experienced by the output shaft 70 is provided through the splines 74 and 76 to the hub 72. The hub 72 may be connected to the rotor 24 by, for example, directly fastening the hub 72 and rotor 24 together. Any suitable mechanical fastening devices, such as nuts and bolts, screws, nails, or rivets, or other suitable fastening devices such as welds, may be utilized to fasten the hub 72 and rotor 24 together. The hub housing 80 may be provided to support the hub 72, and the hub 72 may extend at least partially through the hub housing 80.

Various bearings may surround the various rotatable components of the drivetrain 28 to facilitate relatively efficient rotation of such rotatable components. For example, as shown in FIGS. 2 and 3, bearings 90 may surround the planetary gears 56, and bearings 92 may surround the hub 72. Such bearings 90 and 92 may be roller bearings, and include various roller elements arranged in generally annular arrays, or may be journal bearings or any other suitable bearings.

The various bearings generally require lubrication before, during and/or after operation of the drivetrain 28 and wind turbine 10 in general. Further, it would be desirable for such lubrication to occur without pooling in and leakage out of the drivetrain 28.

Thus, as shown in FIGS. 2 and 3, one or more lubrication passages 100 may be defined in the drivetrain 28. For example, the lubrication passages 100 associated with the hub 72 may in some embodiments be defined in the housing 80. The lubrication passages 100 may be in fluid communication with a bearing or bearings for providing a lubrication fluid 102 to the bearing or bearings, and may further be positioned adjacent to the bearings which require lubrication, as shown in FIG. 2. Thus, lubrication fluid 102 may be flowed through a lubrication passage 100 to a bearing, such as a bearing 92 as shown, to lubricate the bearing.

Lubrication fluid 102 may, in exemplary embodiments, be a suitable oil for lubricating bearings. Alternatively, however, the lubrication fluid 102 may be any other suitable liquid or gas composition.

After lubrication fluid 102 is allowed to lubricate the bearings, excess fluid 102 may be drained. Thus, one or more drainage passages 104 may be defined in the drivetrain 28. Each drainage passage 104 may be in fluid communication with the bearing that was lubricated, such as bearing 92, and may be provided for flowing lubrication fluid 102 therethrough, thus, removing lubrication fluid 102 from the bearing.

FIGS. 2 and 3 illustrate a plurality of drainage passages 104 defined in a drivetrain 28. As shown, in some embodiments, a drainage passage 104 may be defined partially or wholly in a seal, such as in a labyrinth seal 110, a contact seal, or any other suitable seal. Such seals may be provided in the drivetrain 28 to seal various components from one another and/or to generally seal the drivetrain components 28 from the generator 22 components. In other embodiments, as shown, a drainage passage 104 may be defined partially or wholly in the housing 80. In yet other embodiments, a drainage passage 104 may be defined in other suitable component of the drivetrain 28. The drainage passages 104 may extend in any suitable direction for draining the lubrication fluid 102 from the bearings.

To reduce or prevent pooling in and leakage out of the drivetrain 28, lubrication fluid 102 may be suctioned from the bearings. The creation of a negative pressure environment in at least a portion of the drivetrain 28, such as in the various lubrication passages 100 and drainage passages 104, may prevent pooling and reduce leakage.

For example, in exemplary embodiments, a dry sump 120 may be provided in fluid communication with one or more of the drainage passages 104. The dry sump 120 may be configured to suction lubrication fluid 102 from the bearings, such as from bearings 92. The dry sump 120 may include, for example, a pump 122. The pump 122 may be operable to flow lubrication fluid 102 from the drainage passages 104. For example, when operating, the pump 122 may created a suctioning, negative pressure environment as discussed above, thus causing the lubrication fluid to flow from the drainage passages 104. Further, one or more pipes 124 or other suitable conduits may be provided in the dry sump 120. The pipes 124 may be connected to the drainage passages 104, as shown, and may flow the lubrication fluid 102 from the drainage passages 104 therethrough.

In some embodiments, the dry sump 120 may further include a reservoir 126. The reservoir 126 may hold excess lubrication fluid 102 after the lubrication fluid 102 is flowed from the bearings. Alternatively, the excess lubrication fluid 102 may be otherwise discarded from the drivetrain 28 in any suitable fashion.

Further, in some embodiments, the lubrication fluid 102 flowed from the bearing may be recirculated to the bearing. For example, the dry sump 120 may include further piping or other suitable conduits (shown schematically as reference numeral 128) extending between the reservoir 126, pump 122, and lubrication passages 100. The pump 122 may further be operable to flow lubrication fluid 102 through this piping or other conduits to the lubrication passages 100 and bearings, such that lubrication fluid 102 is recirculated to or within the drivetrain 28 as desired or required.

Thus, the drivetrain 28 according to the present disclosure may prevent both pooling and leakage. Such novel and advantageous design may thus result in less losses due to churning of the various components of the drivetrain 28, such as the bearings, higher resulting efficiency of the drivetrain 28, decreased leakage, decreased temperatures of the various components of the drivetrain 28, and decreased noise of the various components of the drivetrain 28. Further, such novel and advantageous design may allow for higher speeds, loads, stiffnesses, and operable lives of the various components of the drivetrain 28, such as the bearings.

The present disclosure is further directed to a method for lubrication a bearing, such as a bearing 92 or a bearing 90. The method includes, for example the step of flowing lubrication fluid 102 to the bearing. The method further includes the step of suctioning the lubrication fluid from the bearing. In some embodiments, the suctioning step includes, for example, operating a dry sump 120 to suction the lubrication fluid from the bearing. Further, in some embodiments, the method includes recirculating the lubrication fluid 102.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A drivetrain for a wind turbine, comprising:
   a rotatable component;
   a bearing surrounding the rotatable component;
   a lubrication passage in fluid communication with the bearing for providing lubrication fluid thereto;
   a drainage passage in fluid communication with the bearing for removing lubrication fluid therefrom; and,
   a dry sump in fluid communication with the drainage passage, the dry sump comprising a pump operable to flow lubrication fluid from the drainage passage.
2. The drivetrain of clause 1, wherein the rotatable component is a hub.
3. The drivetrain of any preceding clause, wherein the hub is connected to a generator rotor.
4. The drivetrain of any preceding clause, wherein at least a portion of the drainage passage is defined in a labyrinth seal.
5. The drivetrain of any preceding clause, wherein at least a portion of the drainage passage is defined in a housing.
6. The drivetrain of any preceding clause, wherein the dry sump further comprises a pipe connected to the drainage passage for flowing lubrication fluid therethrough.
7. The drivetrain of any preceding clause, further comprising a plurality of drainage passages.
8. The drivetrain of any preceding clause, wherein the lubrication fluid is oil.
9. The drivetrain of any preceding clause, wherein the bearing is a roller bearing.
10. A wind turbine, comprising:
   a tower;
   a nacelle mounted to the tower; and
   a drivetrain housed in the nacelle, the drivetrain comprising:
      a rotatable component;
      a bearing surrounding the rotatable component;
      a lubrication passage in fluid communication with the bearing for providing lubrication fluid thereto;
      a drainage passage in fluid communication with the bearing for removing lubrication fluid therefrom; and,
      a dry sump in fluid communication with the drainage passage, the dry sump comprising a pump operable to flow lubrication fluid from the drainage passage.
11. The wind turbine of any preceding clause, wherein the rotatable component is a hub.
12. The wind turbine of any preceding clause, wherein at least a portion of the drainage passage is defined in a labyrinth seal.
13. The wind turbine of any preceding clause, wherein at least a portion of the drainage passage is defined in a housing.
14. The wind turbine of any preceding clause, wherein the dry sump further comprises a pipe connected to the drainage passage for flowing lubrication fluid therethrough.
15. The wind turbine of any preceding clause, further comprising a plurality of drainage passages.
16. The wind turbine of any preceding clause, wherein the lubrication fluid is oil.
17. The wind turbine of any preceding clause, wherein the bearing is a roller bearing.
18. A method for lubricating a bearing in a drivetrain of a wind turbine, the method comprising:
   flowing lubrication fluid to the bearing, the bearing surrounding a rotatable component; and,
   suctioning the lubrication fluid from the bearing.
19. The method of any preceding clause, wherein the suctioning step comprises operating a dry sump to suction the lubrication fluid from the bearing.
20. The method of any preceding clause, further comprising the step of recirculating the lubrication fluid.

## Claims

1. A drivetrain (28) for a wind turbine (10), comprising:
a rotatable component;
a bearing (90, 92) surrounding the rotatable component;
a lubrication passage (100) in fluid communication with the bearing (90, 92) for providing lubrication fluid (102) thereto;
a drainage passage (104) in fluid communication with the bearing (90, 92) for removing lubrication fluid (102) therefrom; and
a dry sump (120) in fluid communication with the drainage passage (104), the dry sump (120) comprising a pump (122) operable to flow lubrication fluid (102) from the drainage passage (104).

2. The drivetrain (28) of claim 1, wherein the rotatable component is a hub (72).

3. The drivetrain (28) of any of claims 1 to 2, wherein at least a portion of the drainage passage (104) is defined in a labyrinth seal (110).

4. The drivetrain (28) of any of claims 1 to 3, wherein at least a portion of the drainage passage (104) is defined in a housing (80).

5. The drivetrain (28) of any of claims 1 to 4, wherein the dry sump (120) further comprises a pipe (124) connected to the drainage passage (104) for flowing lubrication fluid (102) therethrough.

6. The drivetrain (28) of any of claims 1 to 5, further comprising a plurality of drainage passages (104).

7. A wind turbine (10), comprising:
a tower (12);
a nacelle (14) mounted to the tower (12); and
a drivetrain (28) housed in the nacelle (14), the drivetrain (28) comprising:
a rotatable component;
a bearing (90, 92) surrounding the rotatable component;
a lubrication passage (100) in fluid communication with the bearing (90, 92) for providing lubrication fluid (102) thereto;
a drainage passage (104) in fluid communication with the bearing (90, 92) for removing lubrication fluid (102) therefrom; and
a dry sump (120) in fluid communication with the drainage passage (104), the dry sump (120) comprising a pump (122) operable to flow lubrication fluid (102) from the drainage passage (104).

8. The wind turbine (10) of claim 7, wherein the rotatable component is a hub (72).

9. The wind turbine (10) of any of claims 7 to 8, wherein at least a portion of the drainage passage (104) is defined in a labyrinth seal (110).

10. The wind turbine (10) of any of claims 7 to 9, wherein at least a portion of the drainage passage (104) is defined in a housing (80).

11. The wind turbine (10) of any of claims 7 to 10, wherein the dry sump (120) further comprises a pipe (124) connected to the drainage passage (104) for flowing lubrication fluid (102) therethrough.

12. The wind turbine (10) of any of claims 7 to 11, further comprising a plurality of drainage passages (104).

13. A method for lubricating a bearing (90, 92) in a drivetrain (28) of a wind turbine (10), the method comprising:
flowing lubrication fluid (102) to the bearing (90, 92), the bearing (90, 92) surrounding a rotatable component; and
suctioning the lubrication fluid (102) from the bearing (90, 92).

14. The method of claim 13, wherein the suctioning step comprises operating a dry sump (120) to suction the lubrication fluid (102) from the bearing (90, 92).

15. The method of any of claims 13 to 14, further comprising the step of recirculating the lubrication fluid (102).
